# EUROPEAN PATENT APPLICATION

(11) **EP 0 571 902 A2**
(43) Date of publication of application: **01.12.1993**
(21) Application number: 93108282.0
(22) Date of filing: 21.05.1993
(51) Int. Cl.: A23N 1/00, B01D 29/35, B01D 29/64

(54) **Self-cleaning draining device for separating liquids from chopped foodstuffs**

(30) Priority: 25.05.1992 IT MI921267
(71) Applicant: CIRIO, BERTOLLI, DE RICA SOCIETA GENERALE DELLE CONSERVE ALIMENTARI SpA, I-80100 Napoli (IT)
(72) Inventor: Giagnetich, Euro, I-55100 Lucca (IT); Luongo, Mario, I-80026 Casoria (NA) (IT); Sassi, Carlo, I-43100 Parma (IT); D'Uva, Antonio, Loc.S.Martino I-80078 Pozzuoli (NA) (IT)
(74) Representative: Coloberti, Luigi

(57) **Abstract**

A self-cleaning draining device for the continuous separation of a liquid from a chopped foodstuff. The device comprises a tubular casing (11) having axially aligned inlet (12) and outlet (13) ports; it moreover comprises a grate (15) for draining liquid which defines a path for the chopped product between the inlet (12) and outlet (13) of the casing (11); the draining grate (15) comprises a plurality of closely-spaced bars (16) defining longitudinal slots having increasing section in the flowing direction of the liquid so as to ensure a self-cleaning action; a cleaning comb is reciprocable to remove any deposits from the draining slots of the grate (15).

## Description

The present invention relates to a self-cleaning drainage device used to separate a liquid from a solid chopped foodstuff, during a production process or in a packaging system.

As is known, heterogeneous products are treated in the food industry both as semimanufactured and as finished products based on fruit, tomatoes, meat etc. The solid chopped product is generally mixed in high percentages with a conservation liquid which is also used to convey the product along a system in which said product is subjected to heating and/or cooling phases before storage or packaging into a final container.

In the case wherein the product has to be maintained in aseptic conditions throughout the treatment, until its final packaging, it is necessary to provide drainage systems which allow continuous separation of the product from the conveying liquid, guaranteeing aseptic and stable working conditions throughout the process.

In the case of heterogeneous products, for example semi-manufactured products composed of cubes of various types of fruit mixed together, for example to produce a fruit cocktail or fruit salad, or in the case of cubed tomatoes which have to be used later to produce purée or tomato-based sauces, draining the preparation liquid may at times be difficult due to the inevitable presence of parts of skin, minute pieces or small seeds which clog the draining surface.

Thus the need arises for a drainage system for separating liquids from chopped foodstuffs along a path in a treatment system which, in addition to operating substantially continuously, can also guarantee aseptic and self-cleaning working conditions, such as to adapt to different conditions of use.

Therefore the main object of the present invention is to provide a self-cleaning draining device for separating chopped foodstuffs from a conservation and/or conveying liquid solution which is suitable for fulfilling the requirements referred to above.

A further object of the present invention is to provide a self-cleaning draining device which is able to treat heterogeneous foodstuffs, more particularly cubed tomato, ensuring operating conditions which safeguard the solid phase of the product, avoiding impact and squashing of the product itself, at the same time maintaining the dimensions of the draining device extremely small and compatible with whatsoever processing system.

In the treatment of a chopped foodstuff there is likewise the need to package the product with the correct quantity of conservation liquid solution, according to a predetermined recipe. It is therefore necessary to remove a portion of the conveying liquid before packaging, carefully controlling the percentage of liquid which remains mixed with the solid product in order not to jeopardise the quality level of the final product.

Therefore, a further object of the present invention is to provide a self-cleaning draining device, of the type mentioned above, by means of which it is possible to control adequately the percentage of conservation or conveying liquid which remains in the product to be packaged.

These and other objects of the invention can be achieved by means of a self-cleaning draining device having the features of the main claim.

Some embodiments of self-cleaning draining devices according to the invention are to be illustrated in greater detail hereinunder, with reference to the accompanying drawings, in which:
- Fig. 1: is a longitudinal sectional view of a first embodiment for a self-cleaning draining device according to the invention;
- Fig. 2: is an enlarged cross-sectional view, taken along line 2-2 of fig. 1, suitable for showing a first variant of the invention;
- Fig. 3: is an enlarged detail of figure 2;
- Fig. 4: is a sectional view similar to the one in figure 2, suitable for showing a second variant of the invention;
- Fig. 5: is an enlarged detail of figure 4;
- Fig. 6: shows an enlarged detail of a cleaning device provided for the device in figures 1 and 4;
- Fig. 7: shows a cross-sectional view similar to the previous figure 4, for a further embodiment;
- Fig. 8: shows the diagram of a system for controlling the percentage of liquid in the foodstuff, as a function of pressures;
- Fig. 9: shows the diagram of a system for controlling the percentages of liquid in the foodstuff, as a function of flow rates.

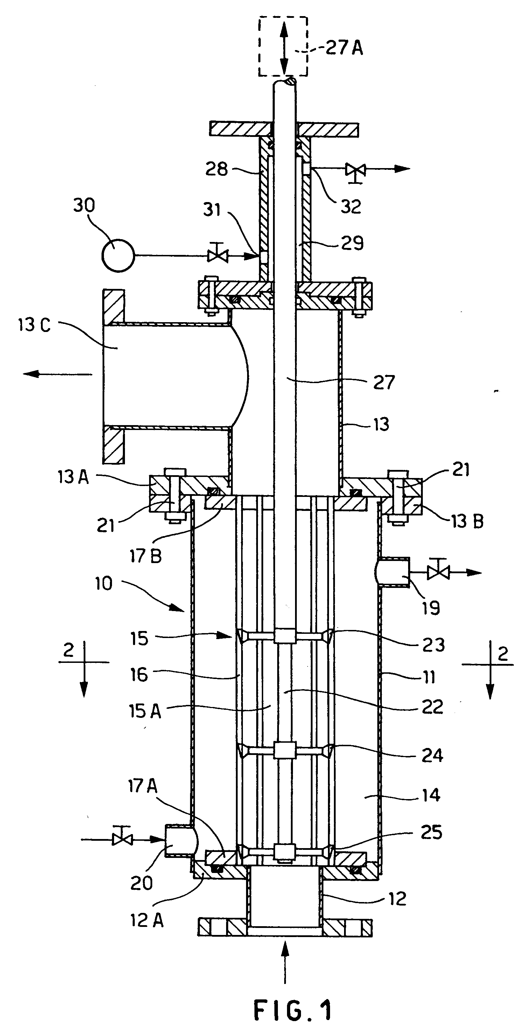

With reference to figures 1 to 3, we will describe an embodiment of a self-cleaning draining device, of the static type, particularly suitable for treating a product composed of a single solid phase present in homogeneous pieces in a conservation and conveying liquid solution, with a limited amount of fragments of pulp or of shreds of skin which otherwise could cause clogging of the draining device after a relatively short period of operation.

Reference 10 in figure 1 denotes the assembly of the draining device substantially comprising an external tubular body 11, an inlet connection 12 and an outlet connection 13, axially aligned one to the other. The inlet connection 12 has a flange 12A welded internally to one end of the tubular body 11, while the outlet connection 13 has a flange 13A which is removably attached, for example by means of bolts 21, to a flange 13B welded externally to the other end of the tubular body 11. 13C in figure 1 finally denotes the outlet conduit for the product, after draining of the liquid, which in this example is arranged orthogonally to the tubular axis 11, which in the case shown is arranged orthogonally to the longitudinal axis of the draining device 10, for the reasons explained hereinbelow.

The tubular element 11 which in the case shown is in the form of a cylindrical body, defines a chamber 14 in which a draining element 15 in the form a cylinder of smaller diameter is arranged and which extends between the inlet connection 12 and the outlet connection 13 mentioned previously.

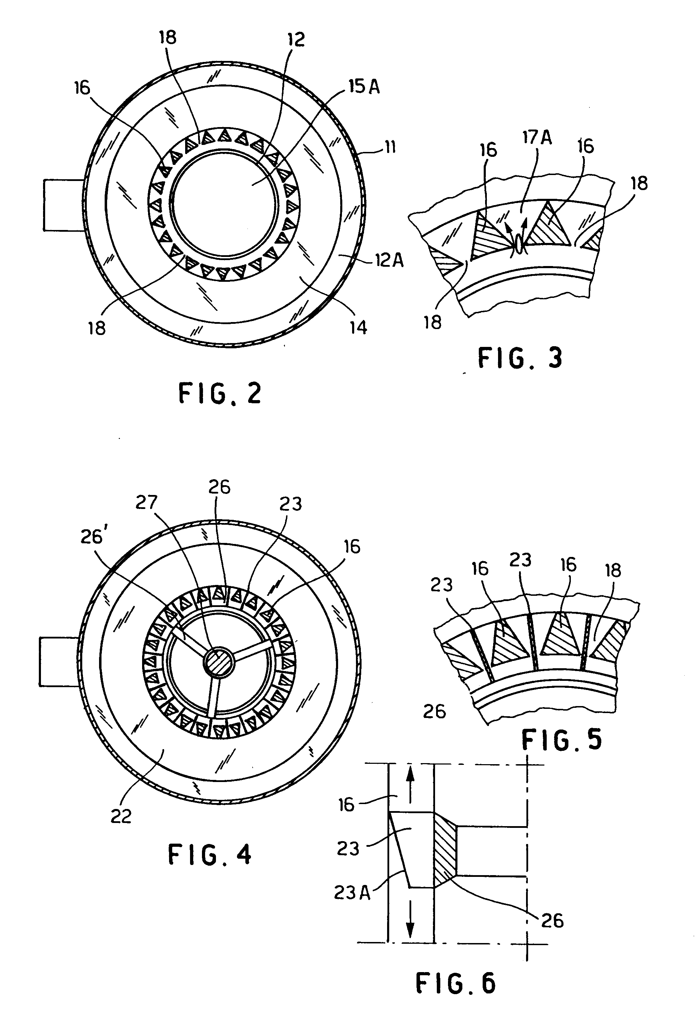

More precisely, as shown in figure 1 and in the cross-sectional views of figures 2 and 3, the draining element 15 consists of a plurality of closely-spaced apart metal bars 16 arranged longitudinally so as to define as a whole a cylindrical draining surface which defines a path for the product between the inlet connection 12 and the outlet connection 13.

The bars 16 of the draining element are welded at their ends to two circular flanges 17A and 17B which come to rest against the flanges 12A and 13A of the two connections at the ends of the chamber 14 of the draining device. In this way the assembly of the draining element 15 can be inserted and removed from the chamber 14, for example for normal operations of maintenance or for other requirements.

As referred previously, the draining device according to the invention has self-cleaning features such as to prevent clogging by shreds of skin or anything else, during operation of the device itself.

In this respect, as shown in the enlarged sectional view of figure 3, the bars 16 of the draining element 15 define narrow slots 18 for the liquid to be drained to pass through, defined by lateral surfaces, divergent one to the other, so that the total sectional area through which the liquid passes increases from the inside of the draining element 15, outwards into the separation chamber 14, as indicated in greater detail in the enlarged section in figure 3. This figure shows that the diverging lateral surfaces of the individual slots 18 are defined by the flat side surfaces of triangular section bars 16. In this way, since the draining device 10 operates under pressure, any corpuscle or shred of skin which becomes inserted in a slot 18 would be automatically pushed out by the flow of drained liquid, in this way achieving a self-cleaning action of the device. In substitution of the triangular bars 16, trapezoidal bars or those of another shape could be used, as shown in the subsequent figure 5.

The draining device described is moreover provided with a drainage outlet 19, as well as a possible discharge outlet 20.

In order to allow self-cleaning working conditions of the whole draining device, by means of the action of the pressurised fluid which flows along and circulates in the device, the draining outlet 19 is preferably positioned near the outlet connection 13B so that the entire separation chamber 14 remains constantly full of pressurised liquid. Nevertheless a different arrangement of the device or a different positioning of the draining outlet 19 from what is shown is possible.

Hitherto a description has been given of a static drainage system, particularly suitable for chopped foodstuffs substantially free of very small parts or shreds of skin for which the self-cleaning action is a result of the action of the pressure of the circulating fluid which passes through an increasing section passage of the draining element as described. In this case the outlet connection 13 shown in figure 1 could be replaced by a simple tubular connection identical or similar to the inlet connection 12. The aseptic working conditions of the draining device are therefore ensured by the hermetic sealing of the entire device.

In the case wherein the product to be separated from the conveying or conservation liquid is a heterogeneous cubed or chopped product, that is to say composed of solid parts of different shapes with plentiful fragments of pulp, seeds or shreds of skin, it is advantageous to fit the draining device with a dynamic anti-clogging system, that is to say comprising an internal cleaning device, denoted as a whole by 22 in figures 1 and 4 of the accompanying drawings, which can be continuously or time to time actuated.

More specifically, as shown in the example in figure 1, the cleaning device 22 consists of a multiple comb comprising, in the case shown, three superimposed sets of teeth 23, 24 and 25 which slide longitudinally in respective slots 18 between adjacent bars 16 of the draining element 15.

The teeth of each set in the comb, according to the example in figures 1, 4 and 5 are supported peripherally by an annular element 26 attached, by means of brackets 26' or in another suitable way, to a central rod 27, appropriately connected to a reciprocable drive device 27A.

In order to allow superimposing of the active or working strokes of the three sets of teeth, the axial distances between the sets of teeth 23, 24 and between the sets of teeth 24, 25 are shorter than the working stroke of the entire comb. In this way total cleanliness of the draining slots 18 is constantly ensured.

In the case of the aseptic draining device, all those devices required for avoiding the risk of recontamination of the product from the outside have to be provided, thus suitable protective measures have to be included to prevent the length of stem 27, intended to penetrate the connection 13 during the reciprocal motion of the cleaning comb 22, from coming into direct contact with the outside environment. Therefore, according to a feature of the present invention, this can be achieved for example by providing a suitable system for circulation of a disinfecting or sterilising fluid such as a disinfectant liquid, or steam, which prevents that portion of the drive stem 27, intended to protrude from the outlet connection 13, from coming into direct contact with the external environment.

This can be achieved by providing the outlet connection 13 with a cylindrical sleeve 28 which extends axially to define an annular chamber 29 of adequate length for the circulation of a disinfecting or sterilising fluid maintained at a pressure which is positive or higher than that of the external environment. The chamber 29 extends in length for a portion substantially equal to or longer than the stroke of the cleaning comb 22, and is appropriately connected to a source of an aseptic fluid 30 which is made to circulate continuously from an inlet 31 towards an outlet 32 at the two ends of the sleeve 28. In this way totally aseptic operation is ensured for the draining device provided with a dynamic cleaning or anti-clogging system of the type described previously.

The sets of teeth 23, 24 and 25 of the comb preferably consist of flat or shaped elements, having their end edge slanted outwards in relation to the bars 16, as denoted by 23A in figure 6, so that the material which clogs the draining slots 18, and which is removed by the teeth of the comb, is pushed to one end of the chamber 14, towards the conduit 19 for draining the liquid during the stroke in one direction of the comb, while it is pushed substantially towards the outside of the draining device during the stroke of the comb in a direction opposite to the previous one.

In the case described previously a draining device has been illustrated as substantially consisting of two coaxial cylinders of which the outer one 11 defines the containing casing, while the internal one 22 defines the actual draining element through which the chopped foodstuff, from which the excess liquid has to be drained, passes.

Other solutions are nevertheless possible, both as regards the shape of the external body 11, and the draining device 15, and the possible cleaning comb 22. For example the body 11, instead of having a cylindrical shape, could be square, rectangular or another shape and, correspondingly, the draining element 15 could consist of flat draining surfaces variously positioned one with respect to the other.

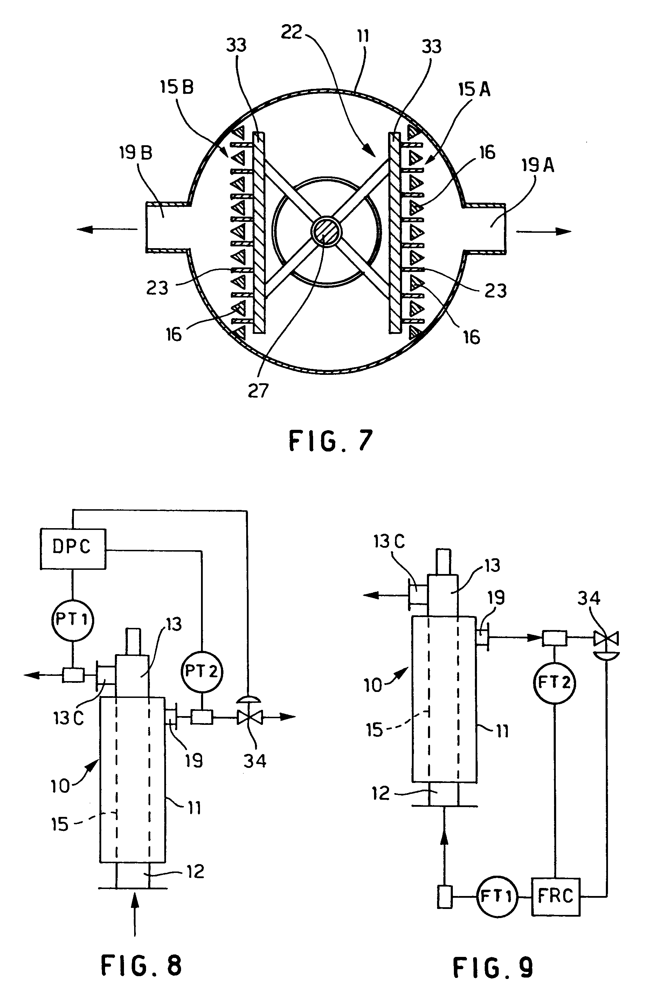

In the example in figure 7, a draining device has been illustrated purely by way of an example, again comprising an external body 11 cylindrical in shape in which, unlike in the previous case, the draining element 15 this time consists of two flat grates 15A, 15B, opposite to each other; the grates 15A and 15B are positioned in spaced apart planes, on the two sides of a diametral plane through the rod 27 which drives the cleaning comb. In this case the inside of the body 11 is divided into a central part through which the chopped product with the preparation or conveying liquid to be drained passes through, and into two lateral parts each fitted with its own drainage conduit 19A, 19B.

Similarly, the comb 22 has a double linear configuration which adapts to the flat shape of the grates 15A, 15B with teeth 23 supported by respective transverse bars 33, made integral to the drive rod 27.

The choice of the shape of the external body 11, of the draining element 15 and of the cleaning comb 22, may vary also from what has been shown according to the specific design and use requirements.

As referred initially, in the case wherein a foodstuff is treated in an aseptic system, in which the product is subjected to processes of heating and cooling, before being sent for packaging, the quantity of liquid present is generally greater than the amount required in the final product, given that a greater quantity of liquid enables greater safeguarding of the solid phase for the entire process. In these cases adequate metering must be provided for the percentage quantity of liquid which remains packaged with the solid product, after draining away the excess.

According to the present invention, the percentage of the liquid which remains mixed with the final product can be controlled and metered either through differential control pressure between the outlet 13C of the product and the outlet 19 of the drained liquid, as shown in figure 8, or through a differential control flow rate of the product between the inlet 12 of the product and the outlet 19 of the drained liquid, as shown in figure 9, so as to remove a constant percentage quantity of liquid from the intaking product.

Figure 8 shows schematically a layout for allowing regulation or metering of the liquid according to the differential discharge pressure of the product and of the drained liquid. In this figure the reference number 11 generically denotes the draining apparatus described previously, in which the chopped foodstuff is fed with the conveying liquid solution through the inlet connection 12, and discharges, after drainage, from the outlet connection 13C, while 19 has always denoted the discharge conduit of the drained liquid. As can be seen in said figure, the outlet 19 of the drained liquid is connected to a motor-driven valve 34, of the modulating type, controlled directly or indirectly by a signal emitted by a differential pressure control (DPC) circuit at whose inputs the signal supplied by a first pressure transducer PT1 connected to the outlet 13C of the draining device 11 and respectively the signal supplied by a second pressure transducer PT2 connected to the outlet 19 of the drained liquid are received. By adequately regulating the ratio between the values of the two pressures sensed by PT1 and PT2, referring the differential pressure value to the quantity of liquid entering the draining device, it is possible to control with extreme accuracy the quantity of drained liquid and, consequently, the quantity of liquid which remains mixed with the solid at the outlet 13C.

Figure 9 of the drawings shows instead the solution which provides for control of the flow rates of the product in intake and of the drained liquid. In this case the quantity of solid product and of liquid entering through the connection 12 is sensed by a flow rate transducer FT1 which transmits a proportional signal to an input of a differential flow rate comparator FRC. The other input of the flow rate comparator FRC receives the signal emitted by a second flow rate transducer FT2 which senses the flow rate of the drained liquid coming out of the outlet 19. In this way too it is possible, by controlling the ratio of the flow rates, to maintain the percentage of discharged liquid, mixed with the solid product, constantly at a required percentage value.

From what has been said and shown in the accompanying drawings it will therefore be understood that a draining device is provided, having self-cleaning features, by means of which it is possible to separate in a continuous process a chopped foodstuff from a conveying and/or preparation liquid, ensuring continuous aseptic operation of the device itself which, advantageously, may be fitted with an internal cleaning device. The control of the percentages of liquid and of solids discharged from the draining device may moreover be carried out in an extremely accurate manner, in this way providing a draining device which is extremely reliable and practical. The intent therefore is that what has been said and shown previously with reference to the accompanying drawings, has been given purely by way of a non- limiting example of the invention.

## Claims

1. Self-cleaning draining device for draining at least a part of a liquid mixed with a chopped foodstuff, in which a mixture of a liquid and of a chopped foodstuff is fed under pressure to an inlet of the draining device and made to flow along a path along which part of the liquid is separated from the foodstuff, characterised in that it comprises a tubular body (11) defining a drainage chamber (14) having an inlet (12) and an outlet (13) respectively for the foodstuff, axially aligned one to the other, as well as a separate outlet (19) for the drained liquid, and in that at least part of the path between the inlet (12) and outlet (13) for the foodstuff is defined by the inside surface at a draining grate (15), said draining grate (15) being formed by a plurality of closely-spaced bars (16) which extend longitudinally in said chamber (14) between the product inlet (12) and outlet (13) mentioned above, the adjacent bars (16) of the grate (15) defining longitudinally extending self-cleaning slots (18) defined by lateral surfaces diverging in the direction in which the drained liquid passes through.

2. Draining device according to claim 1, characterised in that said slots (18) of the draining grate (15) are defined by flat side surfaces which diverge starting from the internal surface of said draining grate( 15).

3. Draining device according to claim 1, characterised in that said draining grate (15) is of cylindrical form and is coaxially arranged within said tubular body (11).

4. Draining device according to the previous claim, characterised in that said draining grate (15) is removably seated in said tubular body (11).

5. Draining device according to claim 1, characterised in that the outlet (19) for the drained liquid is provided in proximity to the outlet (13) for the foodstuff.

6. Draining device according to claim 1, characterised by comprising means (23-25) for cleaning the draining grate (15) in the form of a comb unit having teeth (23-25) axially sliding between the slots (18) of the draining grate (15), and in that driving means (27) for reciprocating the aforementioned cleaning comb (23-25) are provided.

7. Draining device according to claim 6, characterised in that said cleaning comb comprises a plurality of axially spaced sets of teeth (23, 24, 25), in which the distance between adjacent sets of teeth is equal to or smaller than the working stroke of the comb.

8. Draining device according to the previous claims, characterised by the fact that the cleaning comb (23- 25) is connected to a drive stem (27) which protrudes from one end of the drainage chamber (14), and in that aseptic sealing means (29) are provided, which extend axially to said rod (27) for a length equal to or higher than the working stroke of the cleaning comb (23-25).

9. Draining device according to claim 8, characterised in that said sealing means comprise a cylindrical sleeve (28) defining a chamber (29) for the circulation under pressure of a disinfecting or sterilising fluid.

10. Draining device according to claim 6, characterised in that the teeth (23, 24, 25) of the comb have a front edge (23A) which is slanted in relation to the longitudinal direction of the bars (16) of the draining grate (15).

11. Draining device according to claim 1, further characterised by means for controlling the percentage of liquid which is discharged mixed with the foodstuff, said control means comprising a discharge pressure transducer (PT2) of the drained liquid, and a discharge pressure transducer (PT1) of the foodstuff respectively, and a differential pressure control device (DPC) having inlets supplied with the signals from the aforementioned pressure transducers (PT1, PT2), a motor-driven valve (34) being provided on the outlet (19) of the drained liquid, said valve (34) being operatively connected to said differential pressure control device (DPC).

12. Draining device according to claim 1, further characterised in that it comprises means for controlling the percentage of liquid which is discharged mixed with the foodstuff, said control means comprising a first flow rate transducer (FT1) at the inlet (12) for the foodstuff, and a second flow rate transducer (FT2) at the outlet (19) for the drained liquid, and a differential flow rate control device (FRC) having inlets supplied with the signals from the aforementioned flow rate transducers (FT1, FT2), a motor-driven valve (34) being provided at the outlet (19) for the drained liquid said valve (34) being operatively connected to a control outlet of the differential flow rate control device.
